# EUROPÄISCHE PATENTSCHRIFT

(11) **EP 0 730 330 B1**
(45) Veröffentlichungstag und Bekanntmachung des Hinweises auf die Patenterteilung: **16.12.1998**
(21) Anmeldenummer: 96102788.5
(22) Anmeldetag: 24.02.1996
(51) Int. Cl.: H02H 7/085

(54) **Antriebsvorrichtung für Schliessteile bei Kraftfahrzeugen**
Drive mechanism for closing parts in motor vehicles
Dispositif pour mouvoir des éléments à fermer des véhicules automobiles

(30) Priorität: 03.03.1995 DE 19507541
(43) Veröffentlichungstag der Anmeldung: 04.09.1996
(73) Patentinhaber: WEBASTO KAROSSERIESYSTEME GmbH, D-82131 Stockdorf (DE)
(72) Erfinder: Henschel, Ulrich, 81377 (DE); Hahn, Ferdinand, 86911 Diessen a.A. (DE)
(74) Vertreter: Wiese, Gerhard

(56) Entgegenhaltungen:
- DE-A- 3 433 204
- DE-A- 4 401 463

## Beschreibung

Die Erfindung betrifft eine Antriebsvorrichtung für Schließteile bei Kraftfahrzeugen, insbesondere Schiebedächer, Schiebe/Hebedächer und dergleichen, mit einem Antriebsmotor, einem Sensor zur Erfassung der Ist-Drehzahl des Antriebsmotors und einer Einklemmschutzeinrichtung zum Abschalten oder zur Drehrichtungsumkehr des Antriebsmotors bei Einklemmgefahr.

Bei einer bekannten Vorrichtung dieser Art (DE 34 33 204 C2) ist ein Positions-Istwertgeber vorgesehen, der ein der Ist-Stellung des Schließteils entsprechendes Positions-Istwertsignal bildet. Die bekannte Vorrichtung weist ferner einen ersten Differenzierer, der aus dem Positions-Istwertsignal ein der Verstellgeschwindigkeit des Schließteils entsprechendes Geschwindigkeitssignal bildet, und einen zweiten Differenzierer auf, der aus dem Geschwindigkeitssignal ein der Beschleunigung bzw. Verzögerung des Schließteils entsprechendes Beschleunigungssignal bildet. Ein das beginnende Einklemmen signalisierendes Einklemmsignal wird mittels eines Auswerters aus dem Geschwindigkeitssignal und dem Beschleunigungssignal erzeugt. Die bekannte Antriebsvorrichtung erlaubt es nicht, die Verstellgeschwindigkeit des Schließteils konstant zu halten, da die Erkennung der Einklemmgefahr gerade auf einer Drehzahlschwankung bei variablem Lastmoment basiert. Eine Regelung der Drehzahl des Antriebsmotors scheidet daher aus.

Es ist ferner bekannt (DE 33 35 407 C2), bei einer Antriebsvorrichtung für Schließteile bei Krafifahrzeugen zur Lasterfassung den Motorstrom auszuwerten. Dies erfordert jedoch einen erheblichen zusätzlichen Schaltungsaufwand für eine Strom-Messung.

Der Erfindung liegt die Aufgabe zugrunde, eine Antriebsvorrichtung der eingangs genannten Art zu erhalten, die eine Regelung der Verstellgeschwindigkeit des Schließteils gestattet, gleichwohl aber ohne Messung des Motorstromes auskommt.

Diese Aufgabe wird erfindungsgemäß dadurch gelöst, daß eine Antriebsvorrichtung der eingangs genannten Art versehen ist mit einem Drehzahlregler, der ein Stellsignal abgibt, das eine Funktion der Abweichung der Ist-Drehzahl von einer Solldrehzahl des Antriebsmotors ist, mit einer Stelleinrichtung zum Variieren der dem Antriebsmotor zugeführten Speisespannung in Abhängigkeit von dem Stellsignal des Drehzahlreglers sowie mit einer die Einklemmschutzeinrichtung ansteuernden Auswerteinrichtung, die ein beginnendes Einklemmen aufgrund eines Signals erfaßt, das von dem Stellsignal des Drehzahlreglers abhängig ist.

Die Antriebsvorrichtung nach der Erfindung ist bei der Erkennung der Einklemmgefahr nicht auf den Zusammenhang zwischen dem Strom und dem abgegebenen Drehmoment des Antriebsmotors angewiesen. Infolgedessen kann der Schaltungsaufwand zur Strom-Messung eingespart werden. Außerdem kann der Antrieb in vorteilhafter Weise drehzahlkonstant betrieben werden.

Bevorzugte weitere Ausgestaltungen der Erfindung ergeben sich aus den Unteransprüchen.

Die Antriebsvorrichtung nach der Erfindung eignet sich nicht nur für verstellbare Dächer, sondern auch für andere Schließteile bei Kraftfahrzeugen, beispielsweise für Fensterheber.

Bevorzugte Ausführungsbeispiele der Antriebsvorrichtung nach der Erfindung sind nachstehend anhand der beiliegenden Zeichnungen näher erläutert. Es zeigen:
- Fig. 1: ein Blockschaltbild einer Antriebsvorrichtung entsprechend einer ersten Ausführungsform der Erfindung,
- Fig. 2: ein Blockschaltbild einer Antriebsvorrichtung entsprechend einer abgewandelten Ausführungsform der Erfindung, und
- Fig. 3: ein Blockschaltbild einer Antriebsvorrichtung entsprechend einer weiteren Ausführungsform der Erfindung,

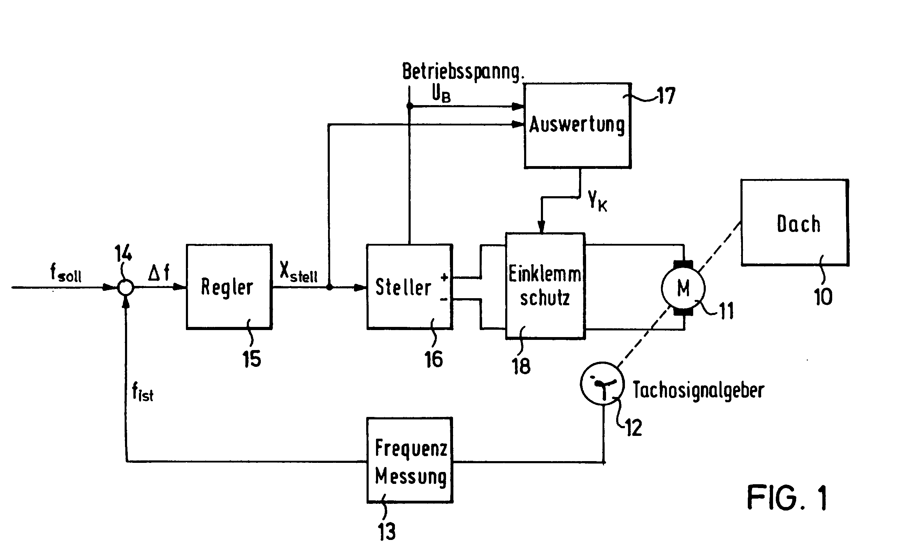

In Fig. 1 ist bei 10 schematisch ein verstellbares Kraftfahrzeugdach angedeutet, bei dem es sich insbesondere um ein Schiebedach, Schiebe/Hebedach und dergleichen handeln kann. Der nicht näher veranschaulichte Verstellmechanismus des Daches 10 ist an einen Antriebsmotor 11 angekoppelt, der mit Gleichspannung von einer an Bord befindlichen Stromquelle (Lichtmaschine oder Batterie) gespeist wird. Mit dem Antriebsmotor 11 ist ein Tachosignalgeber 12 verbunden. Als Tachosignalgeber 12 kann vorteilhaft ein bei solchen Dächern häufig ohnehin vorhandener inkrementaler Positionsgeber genutzt werden, der bei Verstellung des Daches Zählimpulse abgibt, deren Frequenz eine Funktion der Drehzahl des Antriebsmotors und damit auch der Verstellgeschwindigkeit des Daches ist. Dem Tachosignalgeber 12 ist ein Frequenzmesser 13 nachgeschaltet, der ein die Ist-Drehzahl darstellendes Signal fᵢₛₜ an einen Vergleicher 14 liefert. Dem Vergleicher 14 geht ferner ein für die Soll-Drehzahl repräsentativ es Signal fₛₒₗₗ zu, und der Vergleicher bildet als Regelabweichung das Signal Δf. Das Signal Δf wird als Eingangssignal einem Drehzahlregler 15 zugeführt. In Abhängigkeit von dem Signal Δf erzeugt der Drehzahlregler 15 ein Stellsignal Xₛₜₑₗₗ, welches ein von zwei Eingangssignalen einer Stelleinrichtung 16 bildet, die ihrerseits die dem Antriebsmotor 11 zugeführte Speisespannung Uₘₒₜₒᵣ so bestimmt, daß der Antriebsmotor 11 mit der Solldrehzahl (entsprechend fₛₒₗₗ) läuft.

Das Stellsignal Xₛₜₑₗₗ geht ferner einer Auswerteinrichtung 17 zu, an welcher als weiteres Eingangssignal ein die Betriebsspannung der Stelleinrichtung charakterisierenden Eingangssignal U_{B} anliegt. Die Auswerteinrichtung 17 steuert eine Einklemmschutzeinrichtung 18 an, welche mit dem Speisestromkreis des Antriebsmotors 11 verbunden ist.

Im Betrieb wird die Drehzahl des Antriebsmotors 11 von dem Drehzahlregler 15 auf einen konstanten Wert geregelt, indem über das Stellsignal Xstell die Stelleinrichtung 16 so angesteuert wird, daß letztere eine Motorspannung vorgibt, bei welcher sich unabhängig von dem jeweiligen Lastmoment die gewünschte Motordrehzahl einstellt. Verändert sich in diesem Regelkreis die Störgröße 'Lastmoment', so wird die Ansteuerung der Stelleinrichtung 16 nachgeregelt, um wieder die vorgegebene Drehzahl zu erreichen. Das die Stelleinrichtung 16 ansteuernde Stellsignal Xₛₜₑₗₗ bildet infolgedessen eine Funktion des Lastmomentes nach. Die Auswerteinrichtung 17 kann daher das Lastmoment erfassen, und sie ist so ausgelegt, daß sie den Antriebsmotor 11 stoppt oder dessen Drehrichtung umkehrt, wenn das Lastmoment einen vorgegebenen Grenzwert übersteigt, der Einklemmgefahr signalisiert.

Bei der Schaltungsauslegung gemäß Fig. 1 werden jedoch auch Schwankungen der Betriebsspannung U_{B} mit der Stellgröße Xₛₜₑₗₗ ausgeregelt, das heißt, die Betriebsspannung U_{B} der Stelleinrichtung 16 geht als weitere Störgröße ein. Die Auswerteinrichtung 17 wird daher mit U_{B} als weiterem Eingangssignal beaufschlagt, und sie ist so aufgebaut, daß Betriebsspannungsschwankungen das von der Auswerteinrichtung 17 erzeugte Einklemmsignal Y_{K} unbeeinflußt lassen.

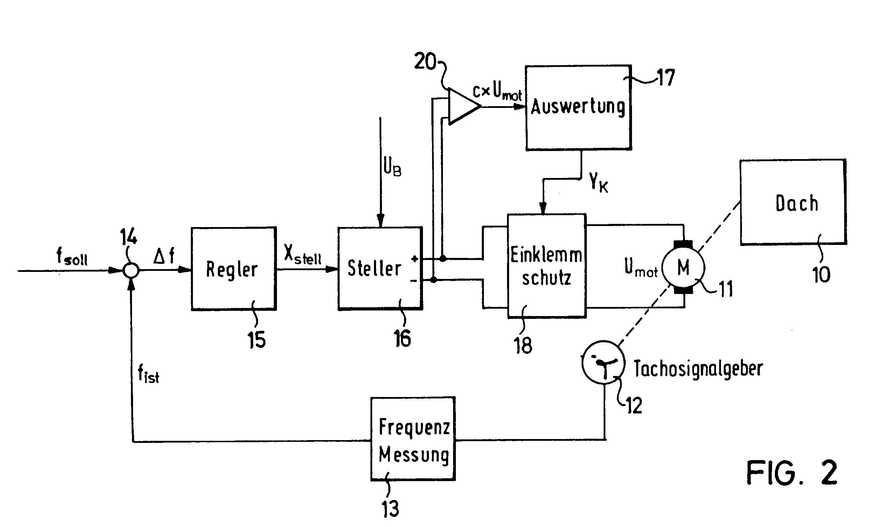

Fig. 2 zeigt eine abgewandelte Ausführungsform, bei welcher die Auswerteinrichtung 17' mit einem der Motorspannung Uₘₒₜ entsprechenden Signal c x Uₘₒₜ beaufschlagt ist.

Im Betrieb der Vorrichtung gemäß Fig. 2 erfolgt eine Regelung der Drehzahl des Antriebsmotors 11 über den Drehzahlregler 15 in der zuvor erläuterten Weise. Die Schaltungsauslegung ist jedoch so getroffen, daß nicht das Stellsignal Xₛₜₑₗₗ, sondern unmittelbar die Ausgangsgröße der Stelleinrichtung 16 ausgewertet wird, d.h. die an dem Antriebsmotor 11 anliegende Motorspannung Uₘₒₜ, multipliziert mit einem von einer Verstärkerstufe 20 bestimmten Faktor c. Bei dieser Schaltungsauslegung ist der Einfluß der Betriebsspannung U_{B} der Stelleinrichtung 16 als Störgröße nicht mehr enthalten. Die Spannung c x Uₘₒₜ ist vielmehr nur noch eine Funktion des Lastmomentes.

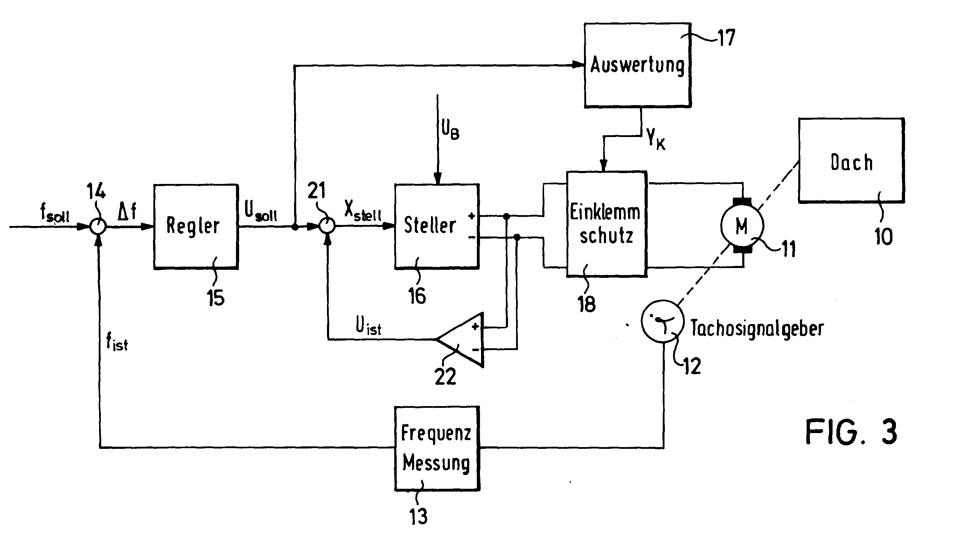

Bei der weiter abgewandelten Ausführungsform gemäß Fig. 3 ist zwischen die Stelleinrichtung 16 und den Drehzahlregler 15 ein Spannungsregler 21 geschaltet. Dem Spannungsregler 21 geht ebenso wie der Auswerteinrichtung 17 das Stellsignal des Drehzahlreglers 15 zu, das den Sollwert Uₛₒₗₗ für den Spannungsregler 21 bildet. An dem Spannungsregler 21 liegt ferner über eine Verstärkerstufe 22 ein der Motorspannung entsprechendes Istsignal Uᵢₛₜ an. Das Ausgangssignal des Spannungsreglers 21 geht der Stelleinrichtung 16 als Stellsignal Xₛₜₑₗₗ zu. Der Spannungsregler 21 regelt die Motorspannung so, daß unabhängig von der Betriebsspannung U_{B} eine Motorspannung erzeugt wird, die der Regelgröße Uₛₒₗₗ entspricht. Damit ist diese Regelgröße wieder nur von der Störgröße "Lastmoment" abhängig; sie kann direkt zur Auswertung durch die Auswerteinrichtung 17 herangezogen werden, um ein beginnendes Einklemmen durch das Einklemmsignal Y_{K} zu signalisieren und den Antriebsmotor 11 zu stoppen oder umzusteuern, wenn das Lastmoment den vorgegebenen Grenzwert übersteigt.

## Patentansprüche

1. Antriebsvorrichtung für Schließteile bei Kraftfahrzeugen, insbesondere Schiebedächer, Schiebe/Hebedächer und dergleichen, mit einem Antriebsmotor, einem Sensor zur Erfassung der Ist-Drehzahl des Antriebsmotor (11) und einer Einklemmschutzeinrichtung (18) zum Abschalten oder zur Drehrichtungsumkehr des Antriebsmotors (11) bei Einklemmgefahr, **gekennzeichnet durch** einen Drehzahlregler (15), der ein Stellsignal (Xₛₜₑₗₗ) abgibt, das eine Funktion der Abweichung der Ist-Drehzahl von einer Soll-Drehzahl des Antriebsmotors (11) ist, eine Stelleinrichtung (16) zum Variieren der dem Antriebsmotor zugeführten Speisespannung in Abhängigkeit von dem Stellsignal des Drehzahlreglers und eine die Einklemmschutzeinrichtung (18) ansteuernde Auswerteinrichtung (17, 17', 17"), die ein beginnendes Einklemmen aufgrund eines Signals erfaßt, das von dem Stellsignal des Drehzahlreglers abhängig ist.

2. Antriebsvorrichtung nach Anspruch 1, dadurch gekennzeichnet, daß die Auswerteinrichtung (17) mit dem Stellsignal (Xₛₜₑₗₗ) des Drehzahlreglers (15) und zusätzlich mit einem die Betriebsspannung (U_{B}) der Stelleinrichtung (16) charakterisierenden Eingangssignal beaufschlagt ist.

3. Antriebsvorrichtung nach Anspruch 1, dadurch gekennzeichnet, daß die Auswerteinrichtung (17') mit einem der Motorspannung entsprechenden Signal beaufschlagt ist.

4. Antriebsvorrichtung nach Anspruch 1, dadurch gekennzeichnet, daß die Auswerteinrichtung (17") mit dem Stellsignal (Uₛₒₗₗ) des Drehzahlreglers (15) beaufschlagt ist und daß zwischen den Drehzahlregler und den Antriebsmotor (11) ein Spannungsregler geschaltet ist, der den Antriebsmotor mit einer Speisespannung beaufschlagt, die dem Stellsignal des Drehzahlreglers nachgeregelt wird.

## Claims

1. A drive device for closing parts of motor vehicles, particularly sliding roofs, sliding/tilting roofs and the like, with a drive motor (11), a sensor for detecting the actual rotary speed of the drive motor (11) and an anti-squash device (18), characterised by a rotary speed regulator (15) which delivers a positioning signal (Xₛₜₑₗₗ) which is a function of the deviation of the actual rotary speed from a desired rotary speed of the drive motor (11), a positioning means (16) for varying the feed voltage fed to the drive motor according to the positioning signal from the rotary speed regulator and, operating the anti-squash device (18), an evaluating means (17, 17', 17") which detects the onset of something or someone becoming squashed from a signal which is dependent upon the positioning signal from the rotary speed regulator.

2. A drive device according to claim 1, characterised in that the evaluating means (17) is subject to the action of the positioning signal (Xₛₜₑₗₗ) from the rotary speed regulator (15) and additionally to an input signal characterising the operating voltage (U_{B}) of the positioning means (16).

3. A drive device according to claim 1, characterised in that the evaluating means (17') is subject to the action of the signal corresponding to the motor voltage.

4. A drive device according to claim 1, characterised in that the evaluating means (17") is subject to the action of the positioning signal (Uₛₒₗₗ) from the rotary speed regulator (15) and in that between the rotary speed regulator and the drive motor (11) there is a voltage regulator which applies to the drive motor a feed voltage which is regulated according to the positioning signal from the rotary speed regulator.

## Revendications

1. Dispositif d'entraînement pour des pièces de fermeture de véhicules automobiles, notamment de toits coulissants, de toits coulissants et relevables ou moyens analogues, comprenant un moteur, un capteur pour détecter la vitesse de rotation réelle du moteur et une installation de protection contre le pincement, pour couper le moteur ou inverser son sens de rotation en cas de risque de pincement,
caractérisé par
- un régulateur de vitesse de rotation (15) qui fournit un signal de réglage (Xₛₜₑₗₗ) qui est une fonction de la différence entre la vitesse de rotation réelle et la vitesse de rotation de consigne du moteur (11), une installation de réglage (16) pour modifier la tension d'alimentation appliquée au moteur en fonction du signal de réglage fourni par le régulateur de vitesse de rotation et une installation d'exploitation (17, 17', 17") commandant l'installation de protection contre le pincement (18), qui détecte un début de pincement en raison d'un signal dépendant du signal de réglage du régulateur de vitesse de rotation.

2. Dispositif d'entraînement selon la revendication 1,
caractérisé en ce que
l'installation d'exploitation (17) reçoit le signal de réglage (Xₛₜₑₗₗ) du régulateur de vitesse de rotation (15) ainsi qu'en plus un signal d'entrée caractérisant la tension de fonctionnement (U_{B}) de l'installation de réglage (16).

3. Dispositif d'entraînement selon la revendication 1,
caractérisé en ce que
l'installation d'exploitation (17') reçoit un signal correspondant à la tension du moteur.

4. Dispositif d'entraînement selon la revendication 1,
caractérisé en ce que
l'installation d'exploitation (17") reçoit le signal de réglage (Uₛₒₗₗ) du régulateur de vitesse de rotation (15) et en ce qu'entre le révélateur de vitesse de rotation et le moteur (11) il y a un régulateur de tension qui fournir une tension d'alimentation au moteur, cette tension étant asservie sur le signal de réglage du régulateur de vitesse de rotation.
